# EUROPEAN PATENT SPECIFICATION

(11) **EP 3 346 239 B1**
(45) Date of publication and mention of the grant of the patent: **08.04.2020**
(21) Application number: 16841350.8
(22) Date of filing: 27.07.2016
(51) Int. Cl.: G01D 5/12, F16B 21/18, G01D 5/14, G01D 11/24, G01D 5/16

(54) **POSITION SENSOR**
POSITIONSSENSOR
CAPTEUR DE POSITION

(30) Priority: 31.08.2015 JP 2015169984
(43) Date of publication of application: 11.07.2018
(73) Proprietor: Hitachi Automotive Systems, Ltd., Hitachinaka-shi, Ibaraki 312-8503 (JP)
(72) Inventor: GORAI, Nobuaki, Hitachinaka-shi, Ibaraki 312-8503 (JP); KATO, Takeshi, Hitachinaka-shi, Ibaraki 312-8503 (JP); ONOZUKA, Junji, Hitachinaka-shi, Ibaraki 312-8503 (JP)
(74) Representative: Strehl Schübel-Hopf & Partner
(86) International application number: PCT/JP2016/071955
(87) International publication number: WO 2017/038318

(56) References cited:
- EP-A1- 2 918 814
- WO-A1-2014/073587
- JP-A- 2005 009 996
- JP-A- 2006 010 346
- JP-A- 2014 052 281
- JP-A- 2014 052 281
- JP-A- 2015 125 103
- JP-A- 2015 125 103
- US-A1- 2010 127 697

## Description

### Technical Field

The present invention relates to a position sensor.

### Background Art

A structure for installing a magnetic position sensor is discussed in PTL 1. The magnet installation structure of PTL 1 has a magnet, a holder, and a shaft. The holder is formed in a partially truncated cylindrical shape. The shaft has a hollow, and the magnet is disposed in the hollow of the shaft, so that the magnet is easily fixed in an accurate position by fitting the holder perpendicularly to the axial direction of the shaft.

### Citation List

### Patent Literature

PTL 1: Japanese Unexamined Patent Application Publication No. 2005-9996 forming also the basis for the two-part form of present claim 1.

Further conventional position sensors are described in US 2010/127697 A1, WO 2014/073587 A1, JP 2014 052281 A and JP 2015 125103 A.

### Summary of Invention

### Technical Problem

However, in the structure for fitting the magnet into the shaft using the holder, the magnet may move perpendicularly to the axial direction of the shaft or in the axial direction of the shaft if a slight gap exists between the magnet and the holder. Therefore, a position between the shaft and the magnet may change disadvantageously.

In addition, in an axial insertion shape, it is difficult to dispose other structural components in the insertion direction. Therefore, it is difficult to secure freedom in the installation structure.

In view of the aforementioned problems, an object of the present invention is to provide a position sensor capable of improve installability for installing the magnet in a movable object in the axial direction, such as the shaft.

### Solution to Problem

In order to achieve the aforementioned object, according to the present invention, there is provided a position sensor as defined in claim 1. It includes a magnetic sensor and a target installed in a movable object, wherein the target has a magnet and a magnet base that holds the magnet, and the magnet base has a magnet holding portion and a fixing portion for fixation to the movable object, the magnet holding portion and the fixing portion being formed integrally.

### Advantageous Effects of Invention

According to the present invention, it is possible to easily install the magnet in the movable object that moves in the axial direction, such as the shaft.

### Brief Description of Drawings

[FIG. 1] FIG. 1 is an installation diagram illustrating a first embodiment.
[FIG. 2] FIG. 2 is a perspective view illustrating the first embodiment.
[FIG. 3] FIG. 3 is a side view illustrating the first embodiment.
[FIG. 4] FIG. 4 is a front view illustrating the first embodiment.
[FIG. 5] FIG. 5 is a perspective view illustrating a second embodiment.
[FIG. 6] FIG. 6 is an exploded perspective view illustrating the second embodiment.
[FIG. 7] FIG. 7 is a side view and an exploded side view illustrating the second embodiment.
[FIG. 8] FIG. 8 is an exploded perspective view illustrating a modification of the second embodiment.
[FIG. 9] FIG. 9 is an exploded side view illustrating a modification of the second embodiment.
[FIG. 10] FIG. 10 is a side view illustrating a modification of the second embodiment.
[FIG. 11] FIG. 11 is a perspective view illustrating a third embodiment.
[FIG. 12] FIG. 12 is an exploded perspective view illustrating the third embodiment.
[FIG. 13] FIG. 13 is a side view and an exploded side view illustrating the third embodiment.
[FIG. 14] FIG. 14 is a perspective view illustrating a modification of the third embodiment.
[FIG. 15] FIG. 15 is an exploded perspective view illustrating a modification of the third embodiment.
[FIG. 16] FIG. 16 is a side view and an exploded side view illustrating a modification of the third embodiment.
[FIG. 17] FIG. 17 is a front view illustrating a shaft according to the first to third embodiments.
[FIG. 18] FIG. 18 is a side view illustrating a shaft according to the first to third embodiments.
[FIG. 19] FIG. 19 is a side view illustrating a shaft according to a modification of the first to third embodiments.
[FIG. 20] FIG. 20 is a front view illustrating a shaft according to a modification of the first to third embodiments.
[FIG. 21] FIG. 21 is a top plan view illustrating a shaft according to a modification of the first to third embodiments.
[FIG. 22] FIG. 22 is a side view illustrating a shaft according to a modification of the first to third embodiments.
[FIG. 23] FIG. 23 is a front view illustrating a shaft according to a modification of the first to third embodiments.
[FIG. 24] FIG. 24 is a top plan view illustrating a shaft according to a modification of the first to third embodiments.
[FIG. 25] FIG. 25 is an exploded perspective view illustrating an example useful to understand the invention.
[FIG. 26] FIG. 26 is a side view illustrating the example useful to understand the invention.
[FIG. 27] FIG. 27 is a front view illustrating the example.
[FIG. 28] FIG. 28 is a perspective view for installation according to the example.
[FIG. 29] FIG. 29 is an exploded perspective view for installation according to the example.
[FIG. 30] FIG. 30 is an exploded side view and a side view for installation according to the example.
[FIG. 31] FIG. 31 is a top plan view for installation according to the example.
[FIG. 32] FIG. 32 is a perspective view illustrating a shaft according to the example.
[FIG. 33] FIG. 33 is a side view illustrating a shaft according to the example.
[FIG. 34] FIG. 34 is a front view illustrating a shaft according to the example.
[FIG. 35] FIG. 35 is a top plan view illustrating a shaft according to the example.
[FIG. 36] FIG. 36 is a perspective view for installation according to a fourth embodiment.
[FIG. 37] FIG. 37 is a side view for installation according to the fourth embodiment.
[FIG. 38] FIG. 38 is a perspective view illustrating a shaft according to the fourth embodiment.
[FIG. 39] FIG. 39 is a side view illustrating a shaft according to the fourth embodiment.
[FIG. 40] FIG. 40 is a top plan view illustrating a shaft according to the fourth embodiment.
[FIG. 41] FIG. 41 is a perspective view for installation according to a fifth embodiment.
[FIG. 42] FIG. 42 is a side view for installation according to the fifth embodiment.
[FIG. 43] FIG. 43 is a perspective view illustrating a shaft according to the fifth embodiment.
[FIG. 44] FIG. 44 is a side view illustrating a shaft according to the fifth embodiment.
[FIG. 45] FIG. 45 is a top plan view illustrating a shaft according to the fifth embodiment.
[FIG. 46] FIG. 46 illustrates an example of installing a position sensor according to the invention on a movable object.
[FIG. 47] FIG. 47 illustrates an example of installing a position sensor according to the invention on a movable object.
[FIG. 48] FIG. 48 illustrates an example of installing a position sensor according to the invention on a movable object.
[FIG. 49] FIG. 49 illustrates an example of installing a position sensor according to the invention on a movable object.
[FIG. 50] FIG. 50 illustrates an example of installing a position sensor according to the invention on a movable object.
[FIG. 51] FIG. 51 illustrates an example of installing a position sensor according to the invention on a movable object.

### Description of Embodiments

### [First Embodiment]

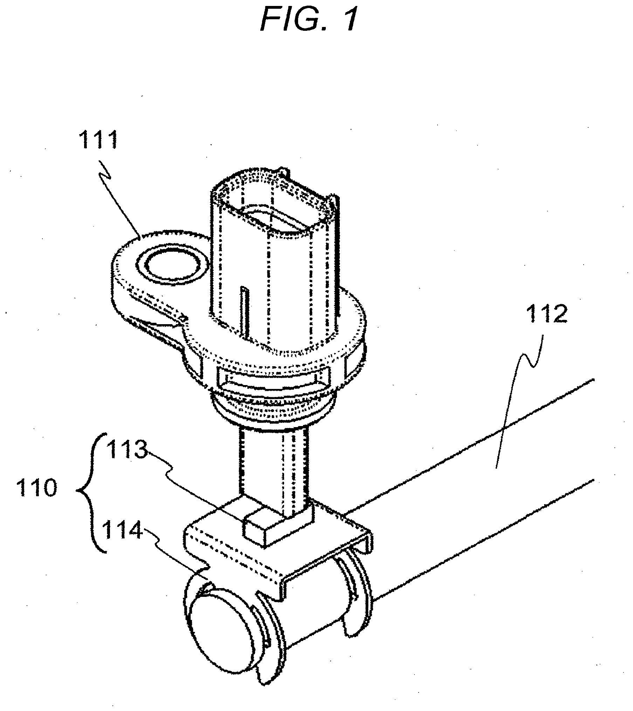

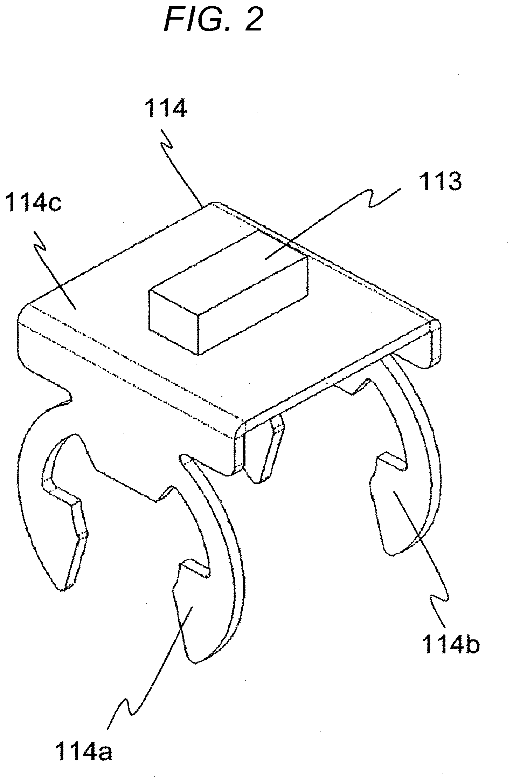

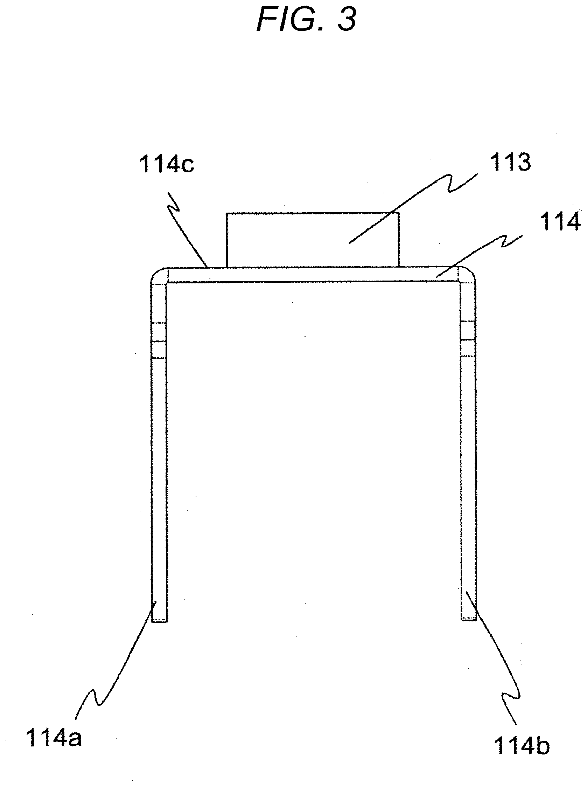

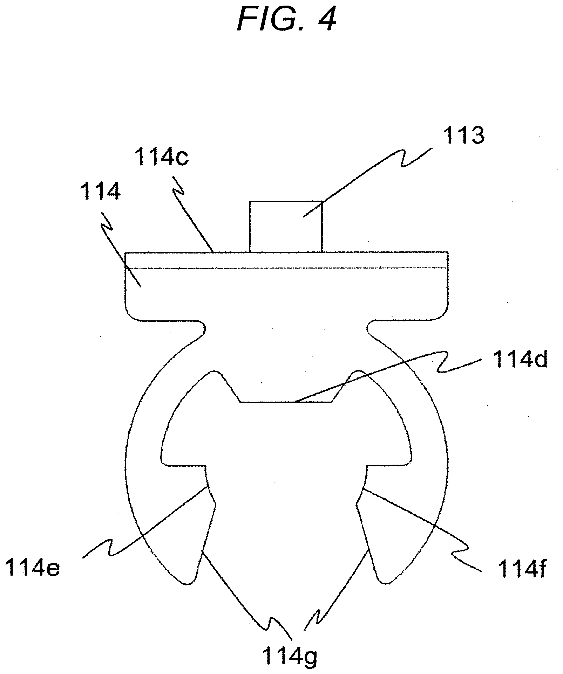

A first embodiment according to the invention will be described with reference to FIGS. 1 to 4.

A position sensor according to this embodiment has a target 110 installed on a movable object 112 moving in an axial direction and a magnetic sensor 111 for detecting a movement of the target 110. Here, according to this embodiment, the movable object 112 will be described as a shaft by way of example .

The magnetic sensor 111 includes, for example, a sensor using a Hall effect element or a sensor using a GMR element.

The target 110 has a magnet 113 for generating a magnetic flux and a magnet base 114 for holding the magnet.

The magnet base 114 has a structure in which a first fixing portion 114a, a second fixing portion 114b, and a magnet holding portion 114c are integrally formed. The first and second fixing portions 114a and 114b are arranged side by side along an axial direction (in other words, movement direction) of the movable object 112. The first and second fixing portions 114a and 114b are provided axially outward of an area where the magnet 113 of the magnet holding portion 114c is mounted.

The first and second fixing portions 114a and 114b have a partially opened ring shape in order to allow installation perpendicular to the axial direction of the movable object 112.

The first fixing portion is shaped to have first, second, and third contact portions 114d, 114e, and 114f coming into contact with the movable object 112. The first to third contact portions are formed such that centers of each contact portion coming into contact with the movable object 112 form an equilateral triangle.

The first contact portion 114d is formed apart from the opening and has a flat portion. The second and third contact portions 114e and 114f are formed in the opening side of the first fixing portion 114a to match a circumferential shape (side shape) of the movable object 112. If the movable object 112 has a cylindrical shape, the circumferential shape is an arc shape.

The first fixing portion 114a has a non-contact portion that does not come into contact with the movable object 112 between the first and second contact portions 114d and 114e. Similarly, a non-contact portion that does not come into contact with the movable object 112 is also provided between the first and third fixing portions 114d and 114f. In other words, the first fixing portion 114a has a region having a cross-sectional area smaller than that of each contact portion.

In addition, the first fixing portion 114a is tapered such that a shape of its opening 114g is gradually narrowed from the opening end toward the inside.

The second fixing portion may have the same shape as that of the first fixing portion.

The effects of this embodiment will be described.

The target 110 can be installed in the shaft serving as a movable object using the first and second fixing portions 114a and 114b integrated into the magnet holding portion 114c. For this reason, according to this embodiment, the target can be installed in the shaft serving as a sensing target without using a fastening part such as a screw.

In addition, the first and second fixing portions 114a and 114b are partially opened ring-shaped fixing portions. Therefore, they can be easily installed from the side direction of the movable object 112.

In addition, since the first fixing portion is shaped to fix the movable object in three portions including the first to third contact portions, it is possible to prevent a positional deviation in a rotational direction. In particular, if the center points of each contact portion are formed in an equilateral triangle shape, a stress generated during installation becomes symmetric with respect to a center of the movable object 112 three times, so that a rotational stress is cancelled.

In addition, one of the three contact portions apart from the opening is shaped to have a flat portion, and the opening side matches the circumferential shape of the shaft. For this reason, it is possible to improve insertion easiness (installability) to the shaft and more effectively suppress a positional deviation in the rotational direction using the flat portion.

A diameter of the shaft may change when the shaft is inserted in the axial direction. In this case, it is difficult to promote insertion of the magnet base and adherence to the shaft. However, according to this embodiment, even when the diameter of the shaft changes between a tip portion and a portion where the magnet is to be installed and the portion to be installed, the magnet base can be inserted from the direction perpendicular to the shaft. Therefore, it is possible to secure adherence or installability between the shaft and the magnet base. Since the non-contact portion has a cross-sectional area smaller than that of the contact portion, it can be easily deformed. Therefore, it is possible to further improve installability at the time of insertion.

In addition, since the second and third installation portions are formed on an arc that matches the circumferential shape of the shaft, this change in the diameter can be absorbed by deformation of the non-contact portion even when the diameter of the shaft changes.

In addition, since the second and third fixing portions have an arc shape that matches the circumferential shape of the shaft, it is possible to secure adherence between the shaft and the contact portion even when the diameter changes.

In addition, since the opening 114g has a tapered shape, it is possible to prevent a point-to-surface contact in which the tip of the first fixing portion 114a comes into contact with the movable object 112. In addition, since the first fixing portion 114a and the movable object 112 make a surface-to-surface contact, it is possible to disperse a stress applied when the target 110 is inserted into the movable object. Therefore, there is no need to insert the target 110 by applying a force more than necessary.

In addition, by forming the first and second fixing portions in the same shape, it is possible to further improve installability. In addition, since they have the same shape, the same force is applied to the first and second fixing portions during and after the installation. Therefore, it is possible to prevent a rotational or distortional force from being applied to the target 110 and further improve installability and positional accuracy of the target 110 to the movable object 112. Note that, by forming the second fixing portion 114b in a shape different from that of the first fixing portion 114a, it is possible to easily recognize the installation direction.

### [Second Embodiment]

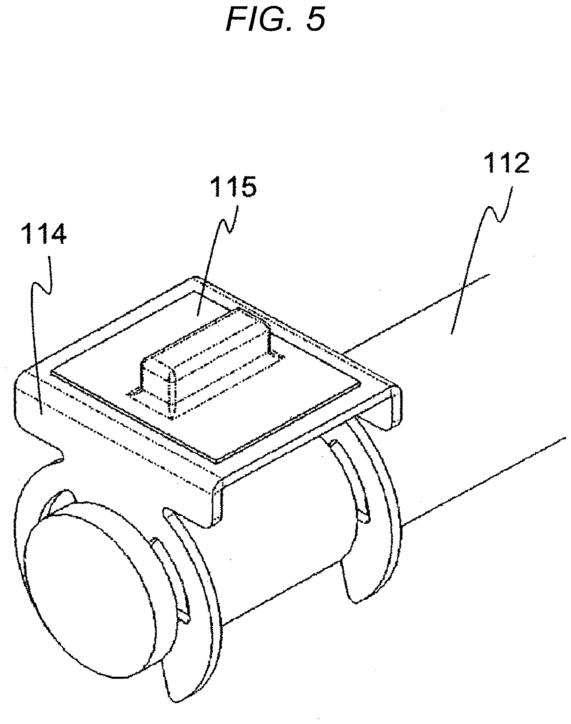

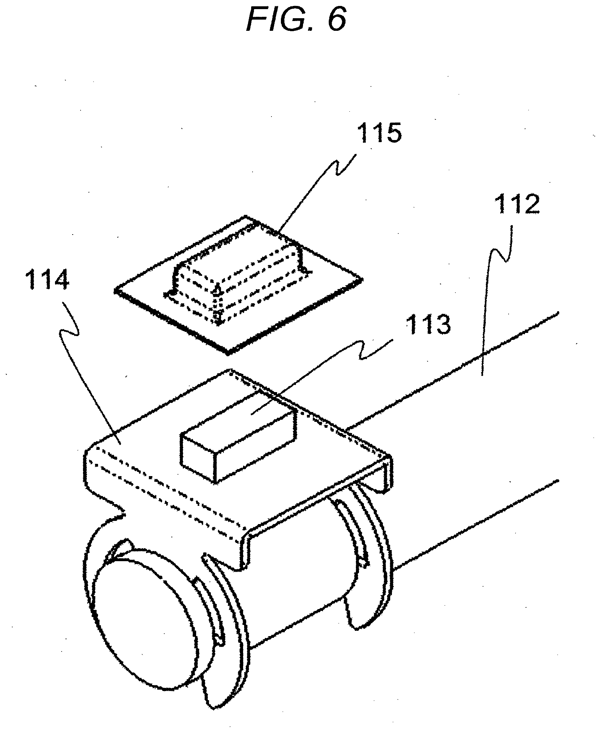

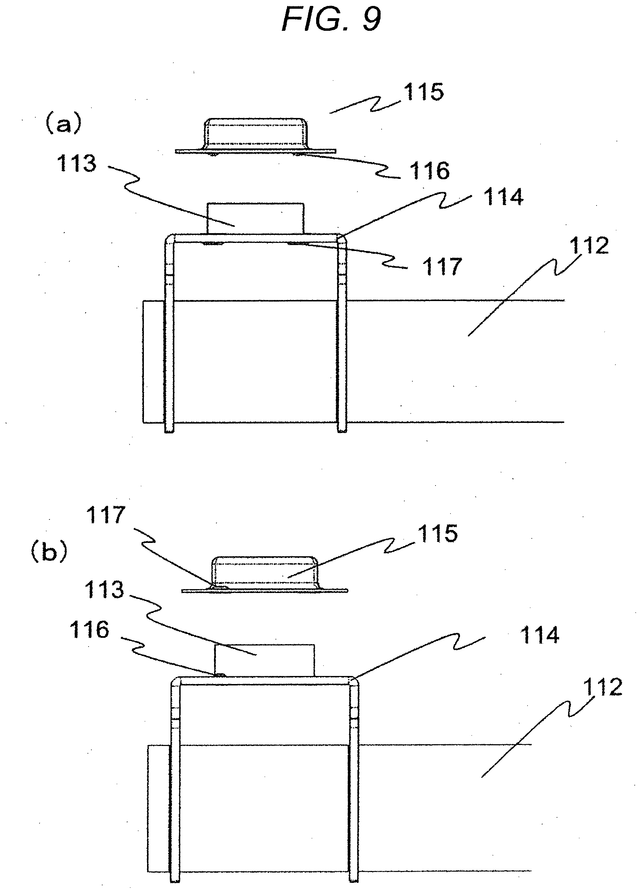

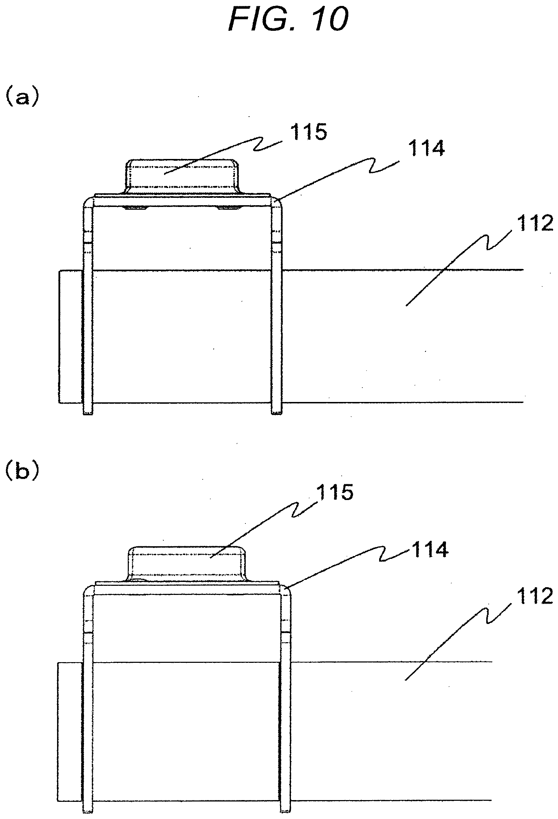

A second embodiment of the present invention will be described with reference to FIGS. 5 to 10. Note that like reference numerals denote like elements as in the first embodiment, and they will not be described repeatedly.

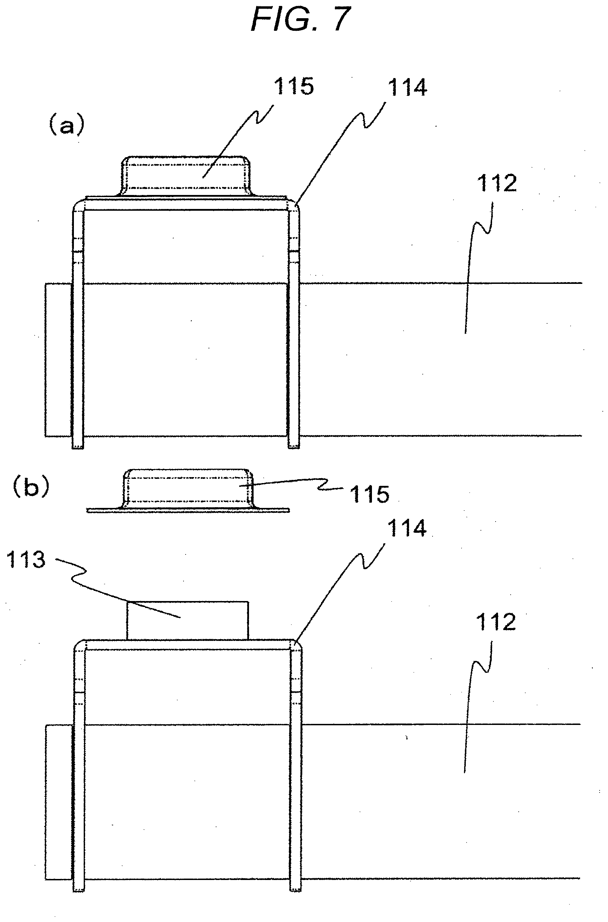

As illustrated in FIGS. 5 and 7, a position sensor according to this embodiment further has a base cover 115 for protecting the magnet 113. The base cover 115 is fixed to the magnet base 114 through welding or the like. The base cover 115 has a housing hollow for housing the magnet 113.

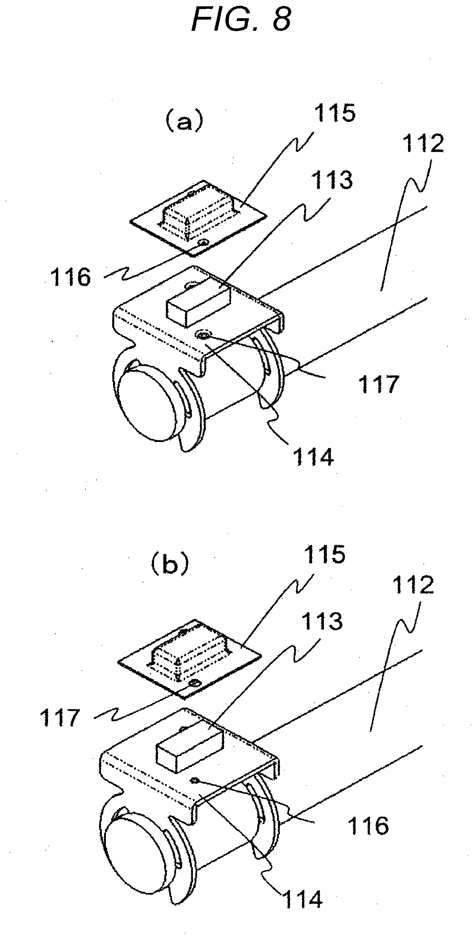

If a protrusion and a hollow for positioning are formed in the magnet base 114 and the base cover 115 as illustrated in the modification of FIGS. 8 to 10, positioning is facilitated preferably. In this case, as illustrated in FIGS. 8a, 9a, and 10a, the positioning protrusion may be provided in the base cover 115, and the positioning hollow may be provided in the magnet base 114. In addition, as illustrated in FIGS. 8b, 9b, and 10b, the positioning hollow 117 may be provided in the base cover 115, and the positioning protrusion 116 may be provided in the magnet base.

According to this embodiment, the magnet 113 is protected by the base cover 115. Therefore, it is possible to further improve reliability.

### [Third Embodiment]

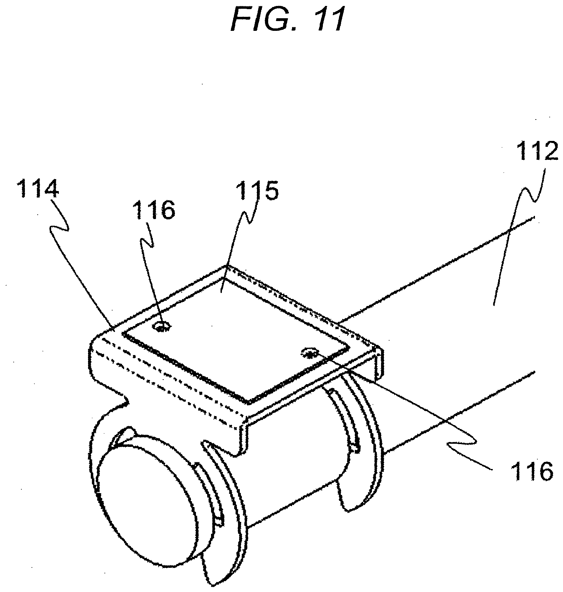

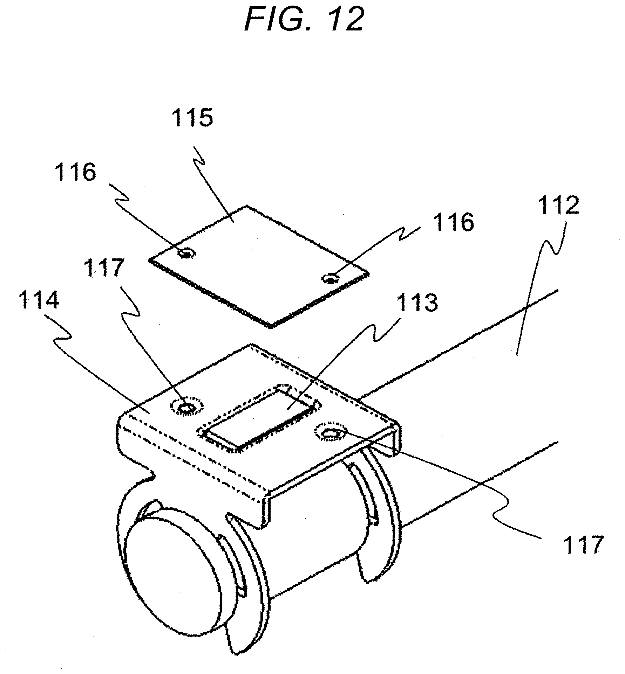

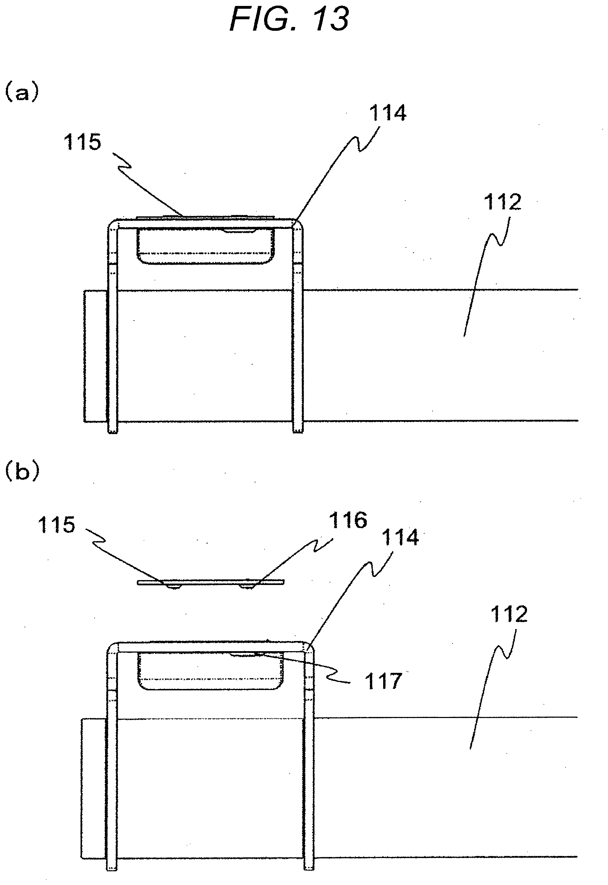

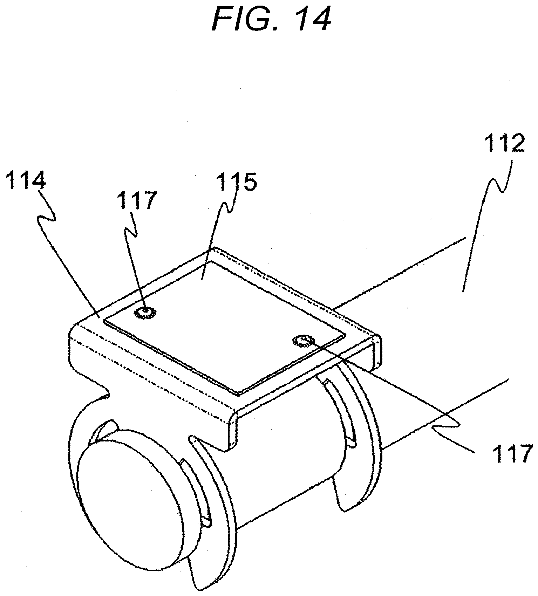

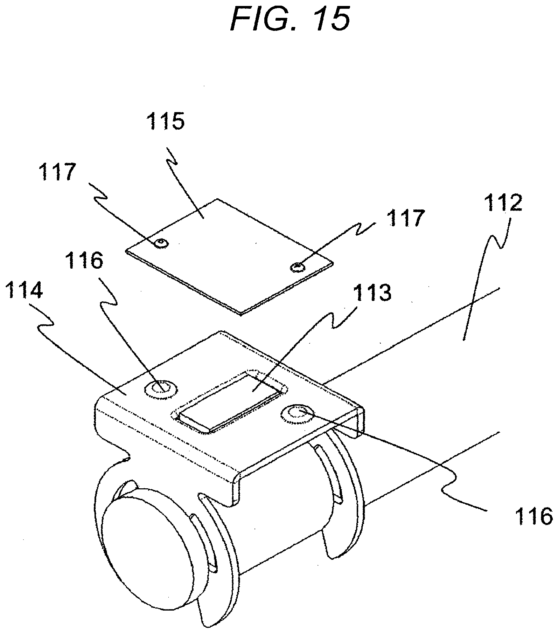

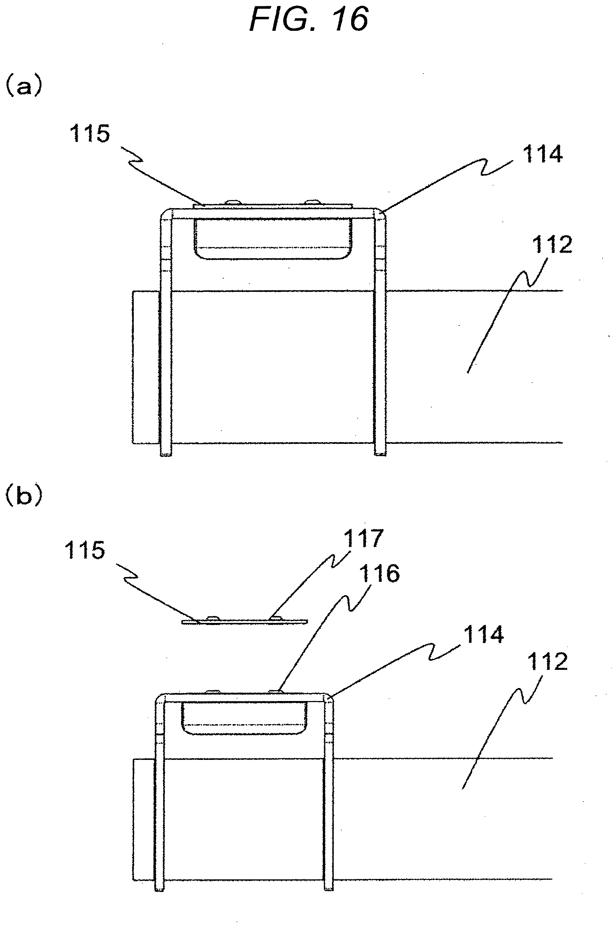

A third embodiment of the present invention will be described with reference to FIGS. 11 to 16. Note that like reference numerals denote like elements as in the first and second embodiments, and they will not be described repeatedly.

The third embodiment of the present invention is different from the second embodiment in that the housing hollow for housing the magnet in the second embodiment is formed in the magnet base side.

Since the magnet 113 is housed in the hollow provided in the magnet base 114, it is possible to hold the magnet 113 without increasing the height of the target 110. Therefore, it is possible to miniaturize the target 110 as a whole.

### [Shaft Structure]

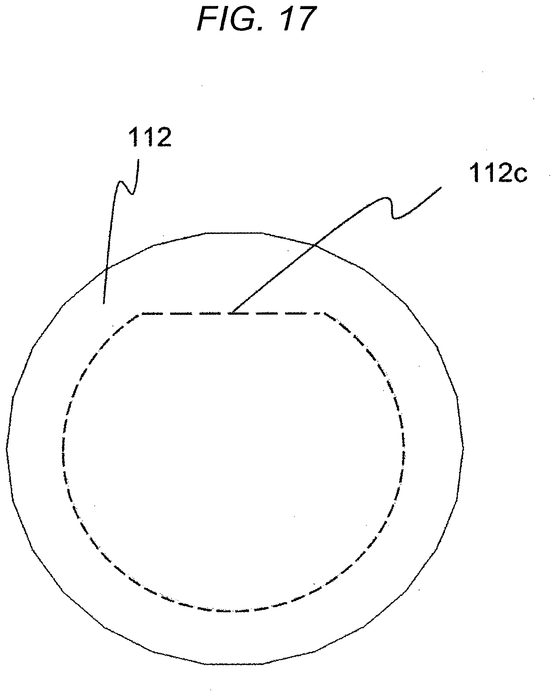

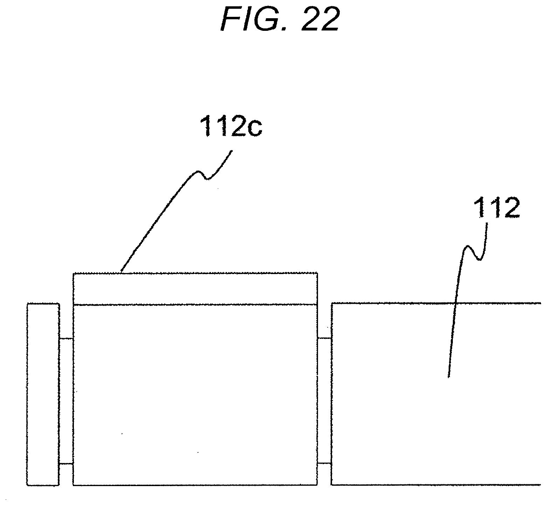

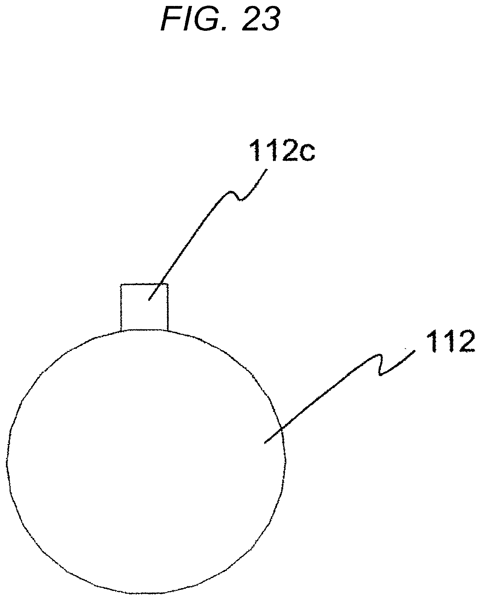

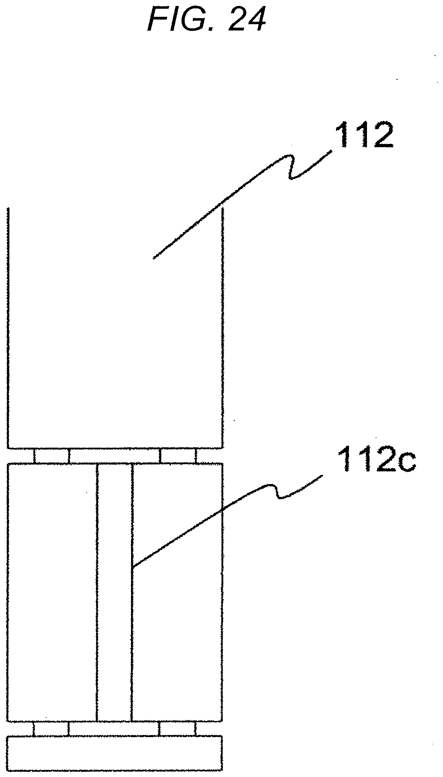

Next, a structure of the movable object 112 for installing the position sensor according to the first to third embodiments will be described with reference to FIGS. 17 to 24. An exemplary shaft will be described as an example of the movable object 112.

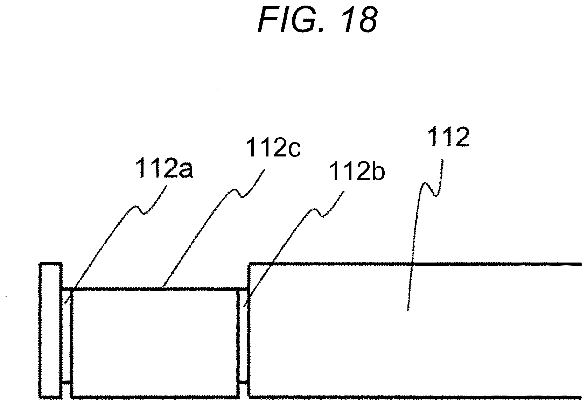

As illustrated in FIGS. 17 and 18, the shaft 112 is provided with first and second grooves 112a and 112b along a circumferential direction. A truncated portion 112c formed by cutting a part of the side surface is provided on the area including the first and second grooves on the side surface of the shaft 112.

The target 110 is fixed to the shaft 112 by fitting the first fixing portion 114a into the first groove 112a and fitting the second fixing portion 114b into the second groove 112b.

In addition, the first contact portion 114d of the first fixing portion 114a comes into contact with the truncated portion 112c provided in the shaft 112 (in other words, the flat portion).

When the second fixing portion 114b is formed similarly to the first fixing portion 114a, the first contact portion 114d comes into contact with the truncated portion 112c as in the first fixing portion 114a.

The effects of the aforementioned structure will be described below.

By fitting the first and second fixing portions 114a and 114b having a ring shape into the first and second grooves 112a and 112b provided in the shaft 112, it is possible to suppress a positional deviation of the target 110 in the axial direction. In addition, since the target 110 can be installed while being guided by this groove, installability is improved.

Since the first contact portion 114d having a flat portion and the truncated portion come into contact with each other, it is possible to suppress a positional deviation in the rotational direction.

In addition, since the holding portion of the magnet base is fixed to the flattened portion of the shaft 112, it is possible to easily recognize a position where the magnet is to be fixed.

When the second fixing portion 114b is formed similarly to the first fixing portion 114a, the first contact portion 114d comes into contact with the truncated portion (flat portion) in two positions . Therefore, it is possible to further suppress a positional deviation in the rotational direction.

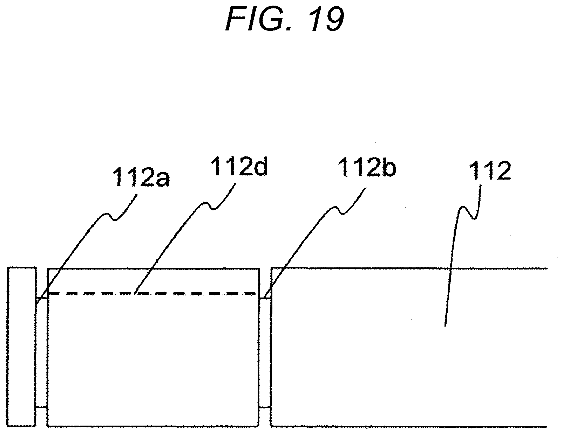

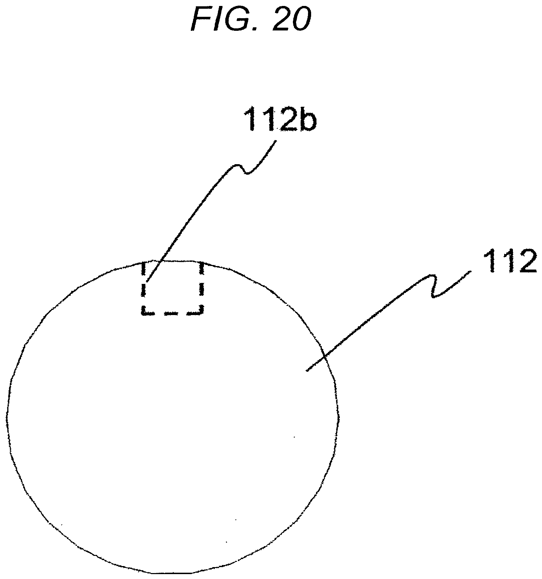

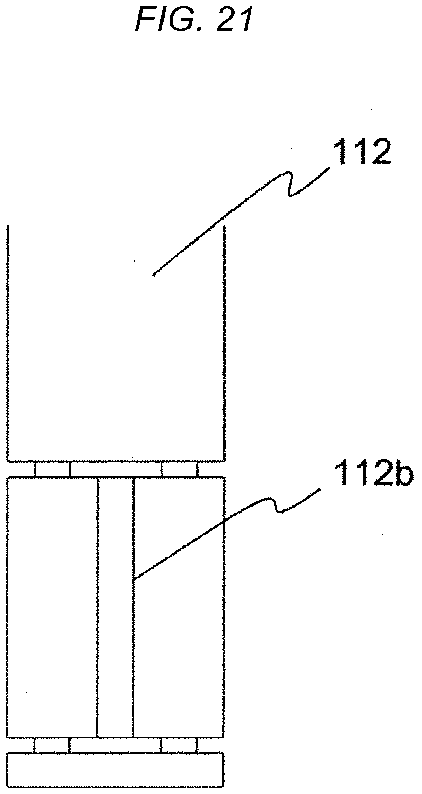

Although the truncated portion 112c is formed in the shaft 112 by way of example in the aforementioned description, alternatively, the truncated portion 112c may be substituted with a notch. A hollow 112d may be formed as illustrated in FIGS. 19 and 20, or a protrusion 112e may be formed as illustrated in FIGS. 21, 22, and 23. In such a configuration, it is possible to obtain the same effects as those of the truncated portion 112c.

### [Example useful to understand the invention]

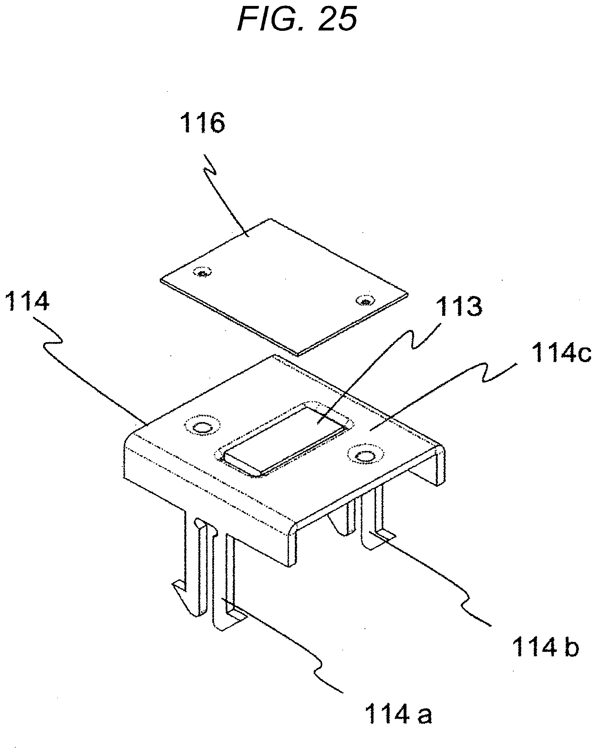

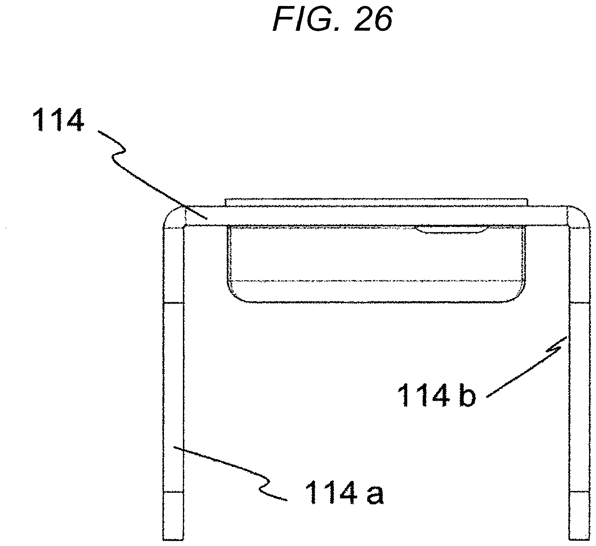

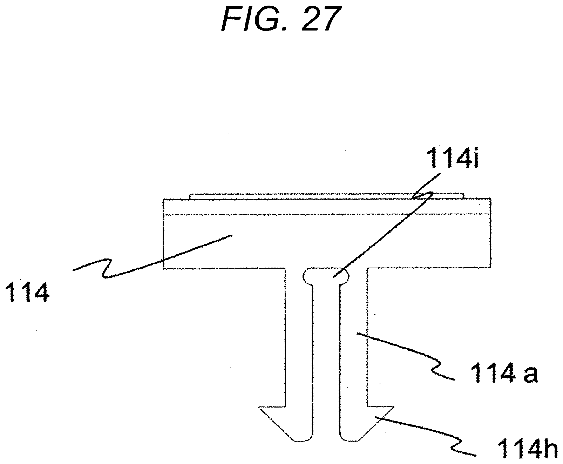

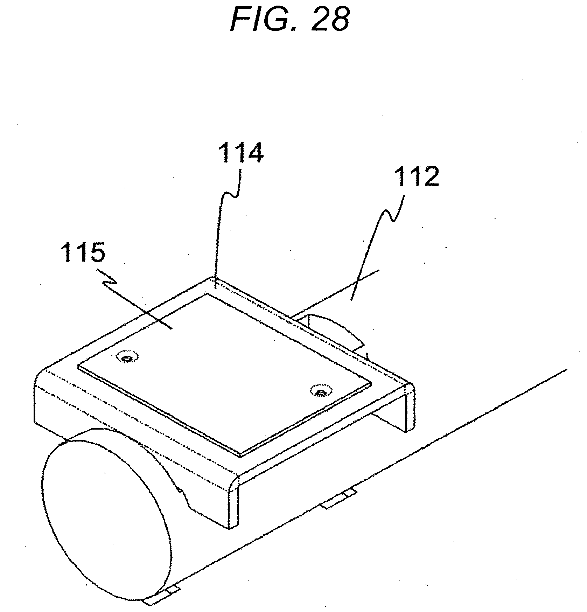

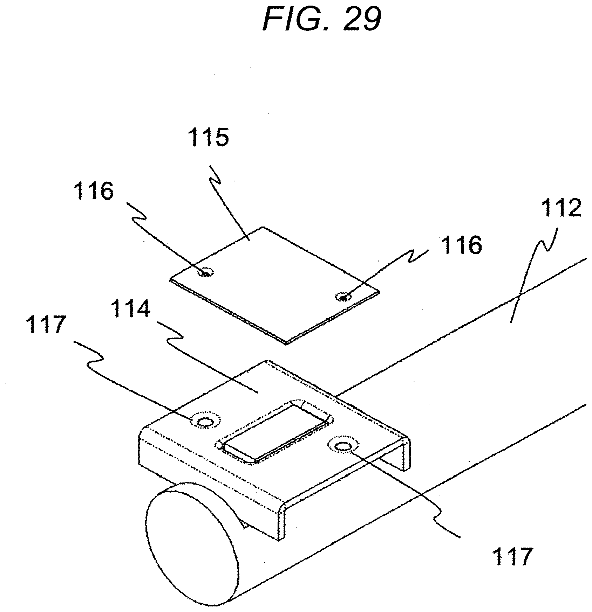

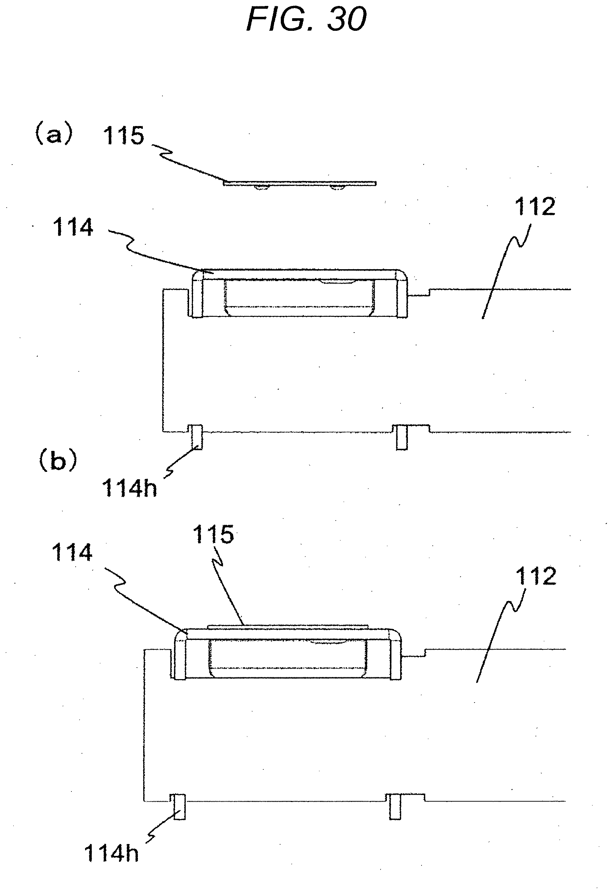

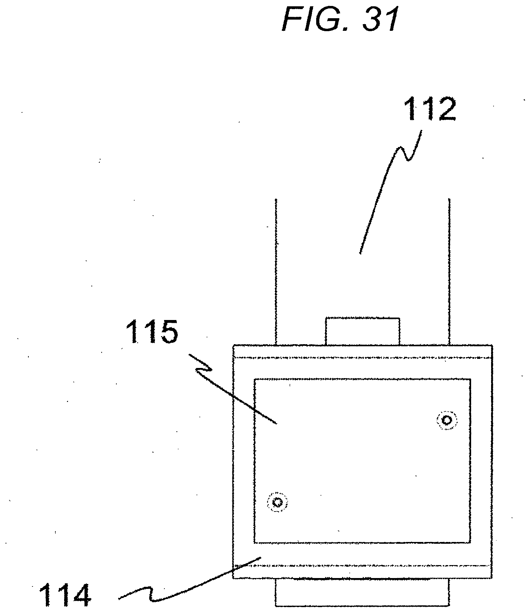

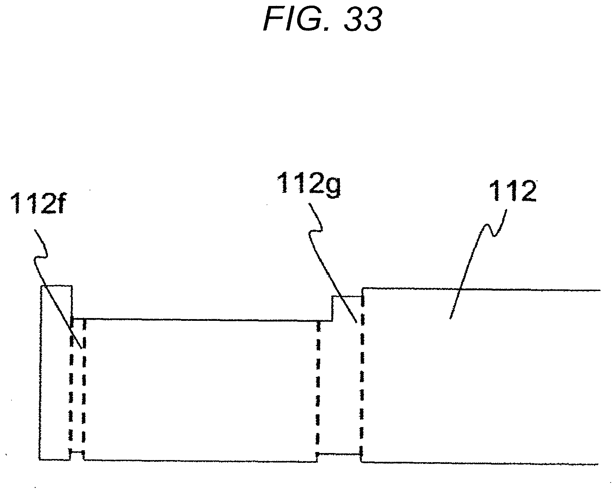

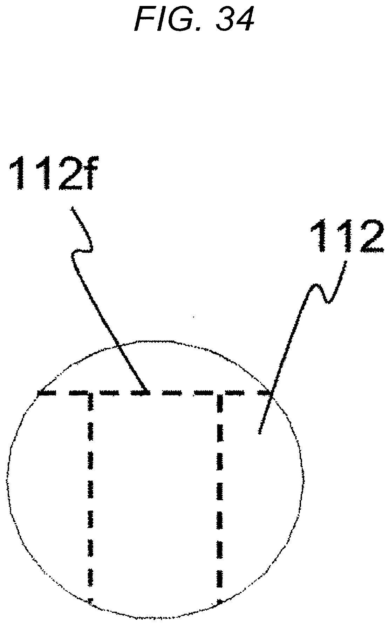

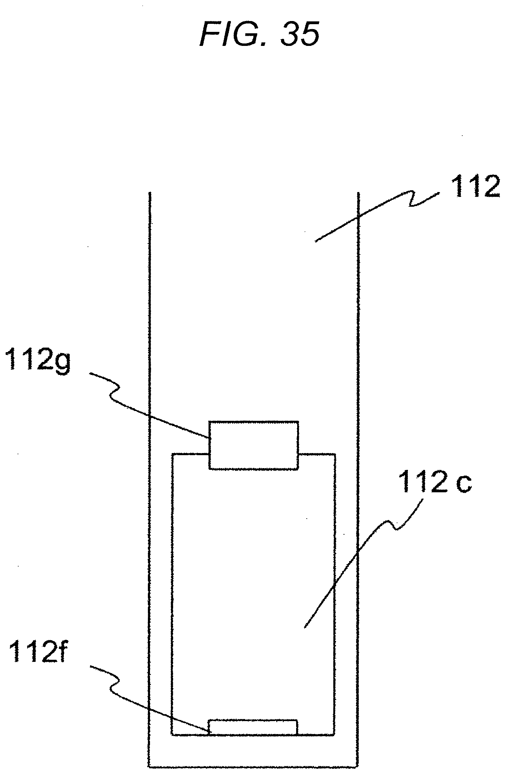

An example useful to understand the present invention will be described with reference to FIGS. 25 to 35. Note that like reference numerals denote like elements as in the first to third embodiments, and they will not be described repeatedly.

In this example, the first and second fixing portions have shapes different from those of the first to third embodiments.

The first fixing portion 114a according to this example has a pair of plates straightly extending in parallel such that they can be inserted into holes of the movable object 112 to allow fixation. In addition, tip portions 114h have a hook shape. By inserting the first fixing portion 114a into the hole of the shaft 112 and then hooking the hook shape to the shaft 112, the target 110 can be fixed to the shaft 112. In addition, the first fixing portion 114a has a base portion 114i having an R-shape which is a relief shape. By virtue of this relief shape, the first fixing portion 114a can be easily deformed when installing the target 110 in the shaft 112. Therefore, installability is improved. The second fixing portion 114b has the same shape as that of the first fixing portion.

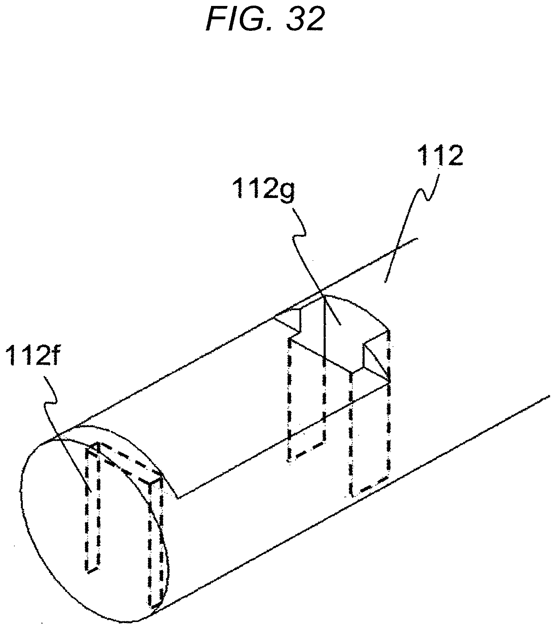

As illustrated in FIGS. 32 to 35, the shaft 112 where the target 110 is installed is provided with a truncated portion 112c, a first hole 112f, and a second hole 112g. By inserting the first fixing portion 114a into the first hole 112f and inserting the second fixing portion 114b into the second hole 112g, the target 110 is fixed to the shaft 112.

Here, by providing a clearance in the second hole 112g, it is possible to reduce influence of a dimensional change caused by a solid variation. Therefore, it is possible to further improve installability.

### [Fourth Embodiment]

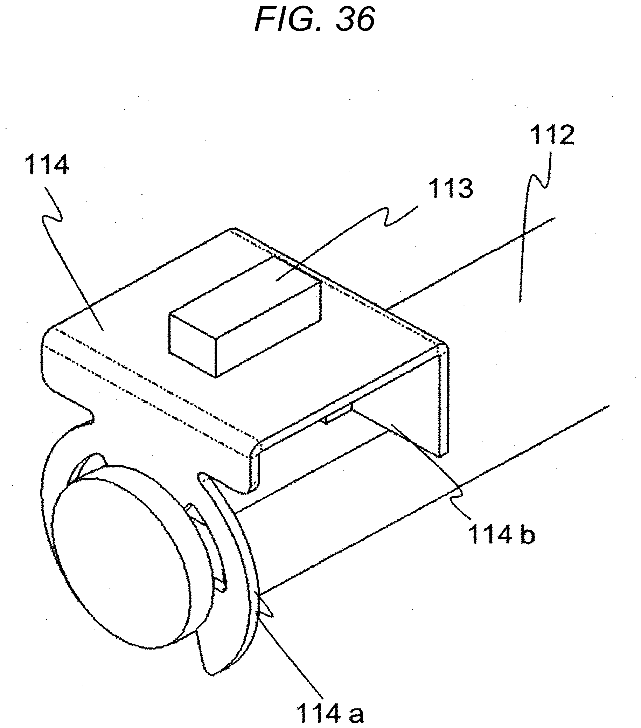

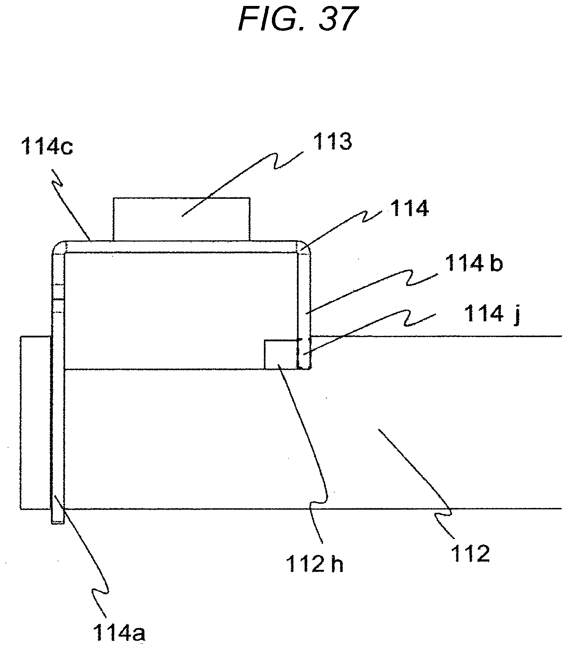

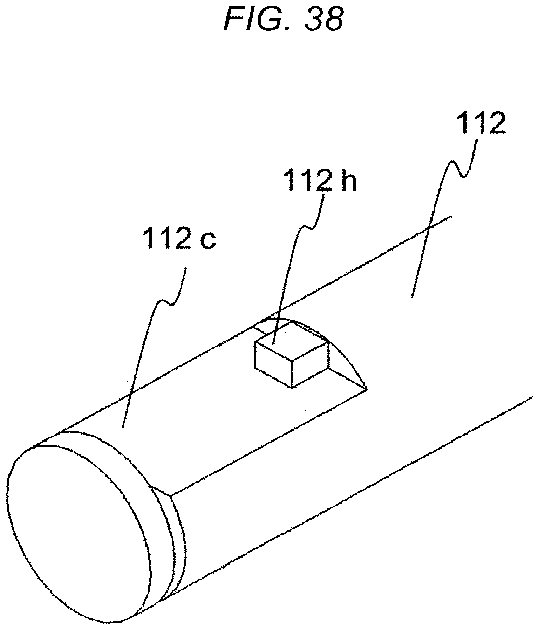

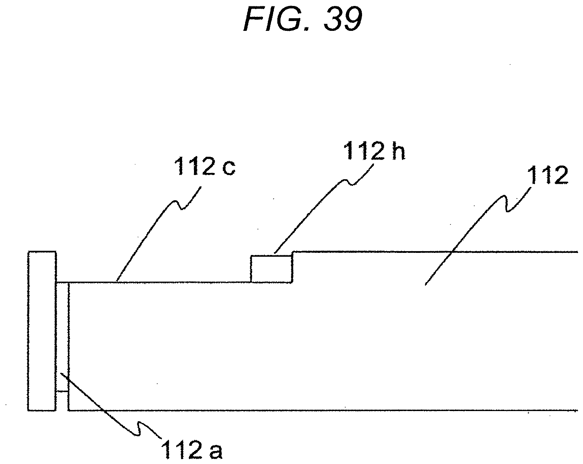

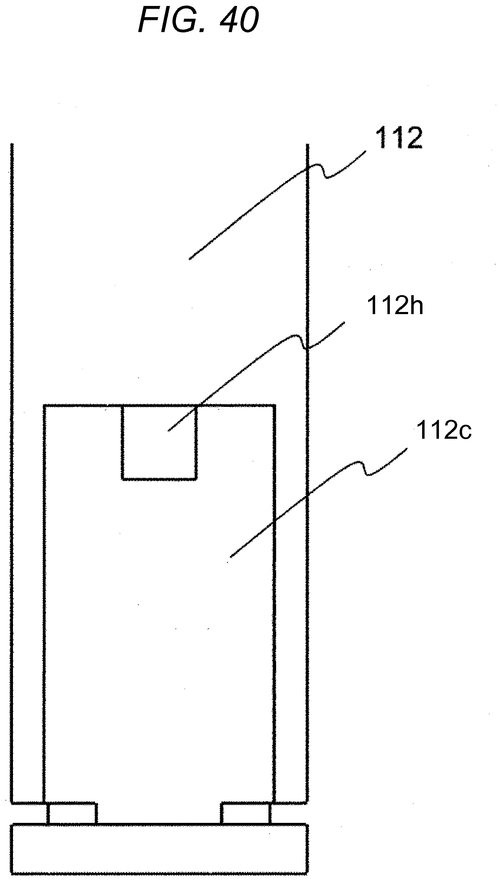

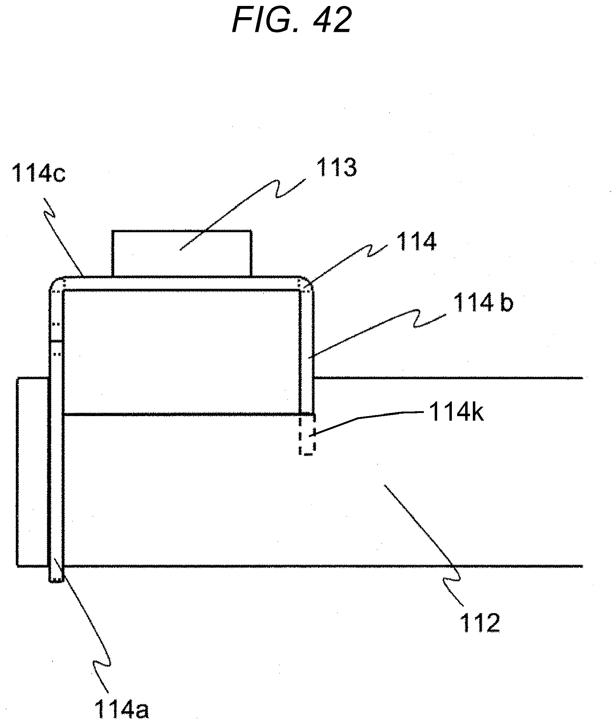

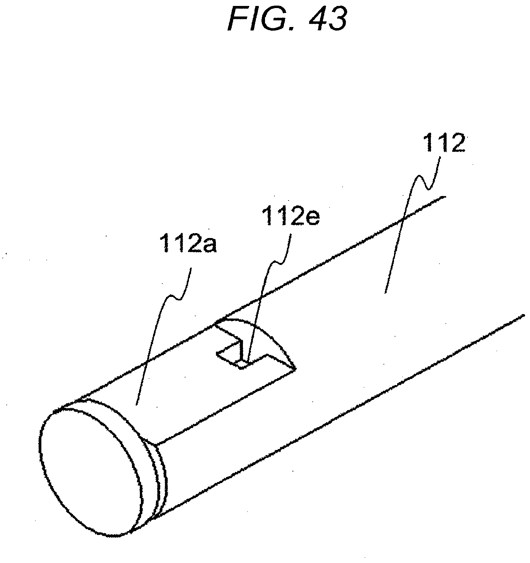

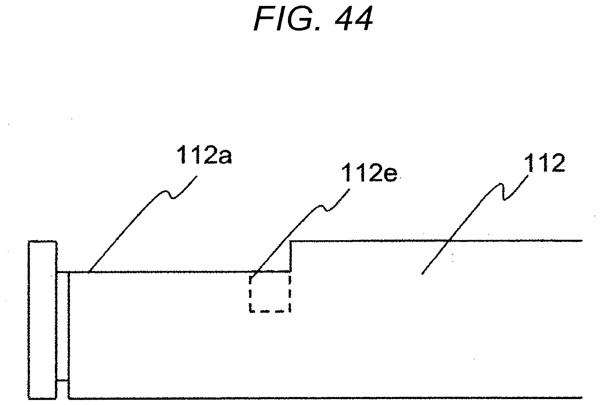

A fourth embodiment of the present invention will be described with reference to FIGS. 36 to 45. Note that like reference numerals denote like elements as in the first to third embodiments, and they will not be described repeatedly.

In this embodiment, the second fixing portion 114b has a shape different from those of the first to third embodiments.

As illustrated in FIGS. 36 to 40, the second fixing portion 114b is provided with a hollow 114j fitted to the protrusion 112h of the movable object 112. As a result, a movement in a twist direction is restricted. According to this embodiment, it is possible to fix the target 110 to the movable object 112 while simplifying the configuration of the second fixing portion 114b.

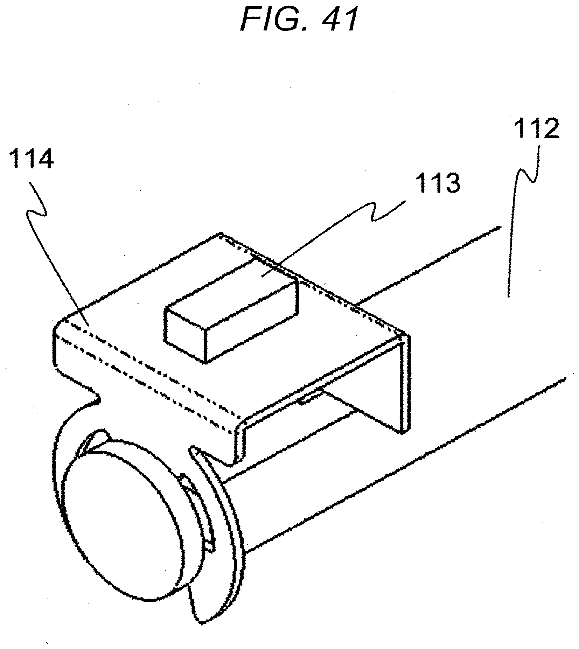

As a modification, the second fixing portion 114b is provided with a protrusion 114k fitted to the hollow 112e of the movable object 112 as illustrated in FIGS. 41 to 45.

### [Installation Example of Position Sensor]

Next, an exemplary case where the position sensor according the first embodiment is installed on the movable object 112 will be described as an installation example.

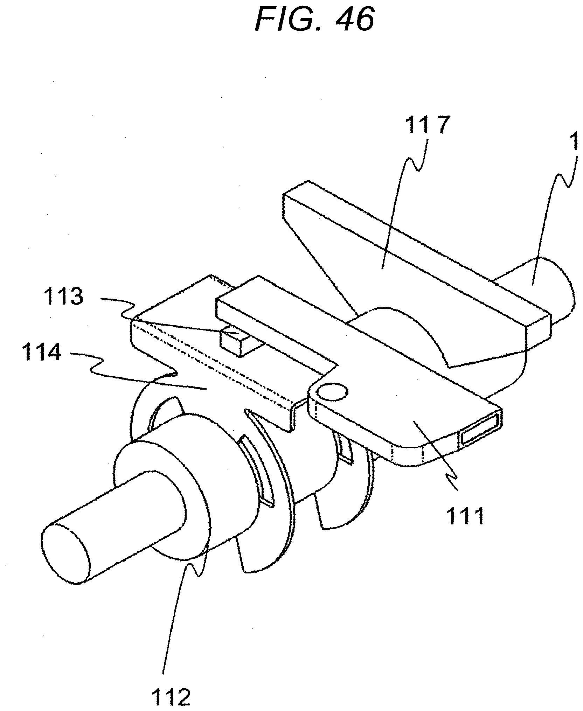

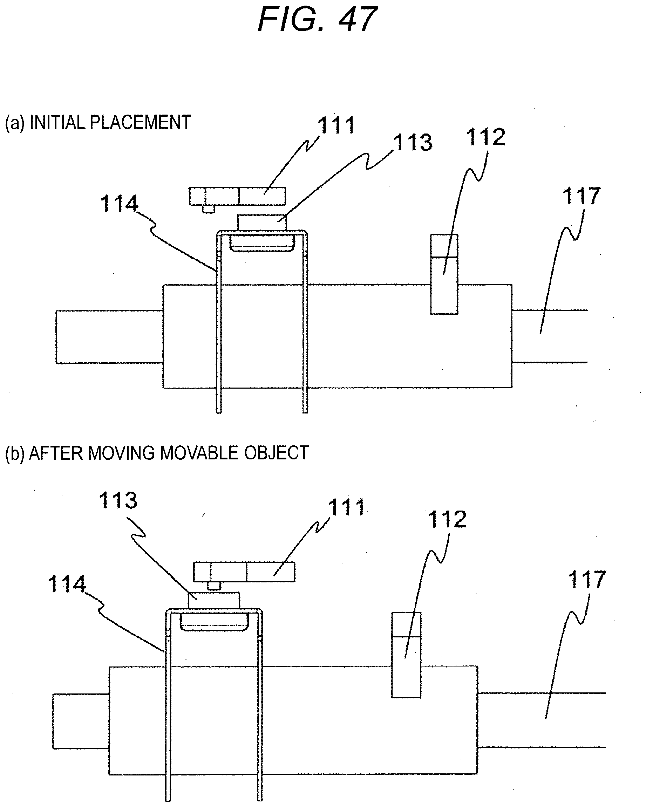

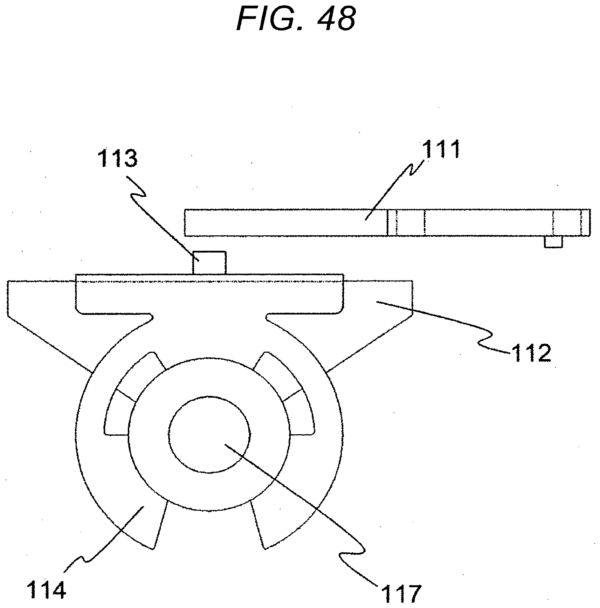

Although the position sensor is installed on the shaft in each embodiment, the target 110 according to the present invention can also be easily installed on a movable object 112 even when the movable object has a cylindrical portion provided with a cavity such as a pulley, and a shaft 1 is inserted into the cylindrical portion so that the cylindrical portion moves along the shaft as illustrated in FIGS. 46 to 48.

As an advantage of the fixing portion having a ring shape as described in the first to fourth embodiments, the target 110 can also be easily installed in a movable object even when the movable object has a cylindrical portion such as a pulley and a shaft is arranged inside the cylindrical portion.

According to the first to fourth embodiments and the example useful to understand the invention, for example, even when a component that may be an obstacle in insertion of the axial direction such as the structure 117 is formed in the movable object, the target can be easily installed from a direction perpendicular to the axial direction. Therefore, it is possible to improve freedom in installation. In addition, even when such a structure is provided, it is not necessary to form an installation portion for installation on the outside in the axial direction. Therefore, this contributes to miniaturization as a whole.

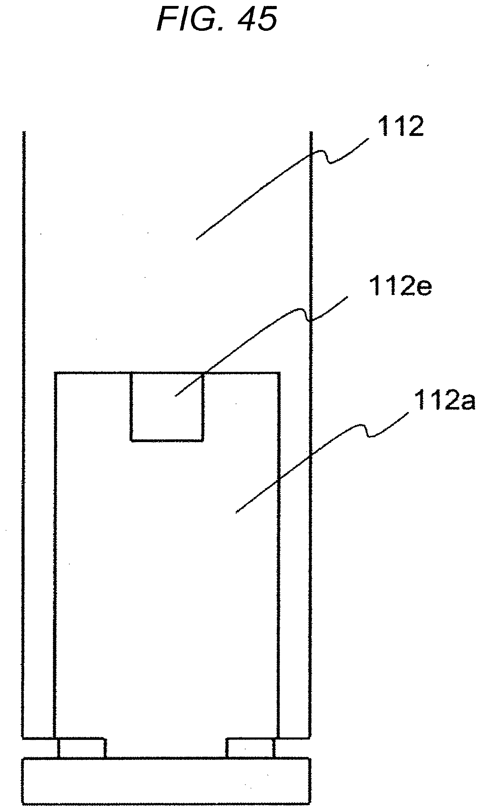

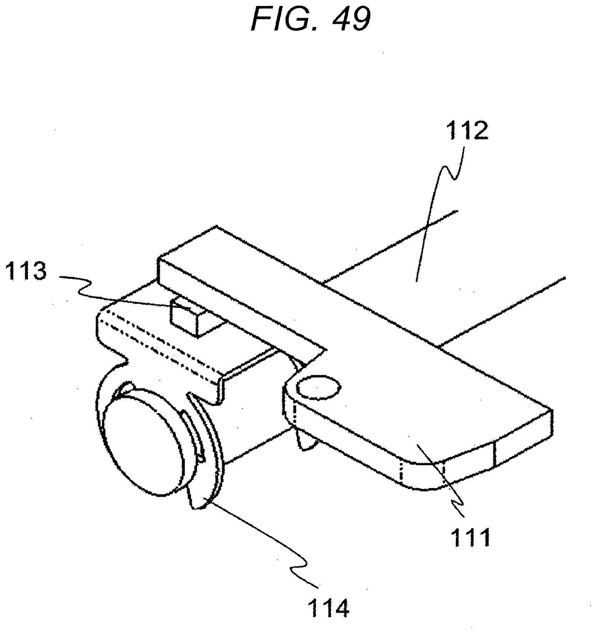

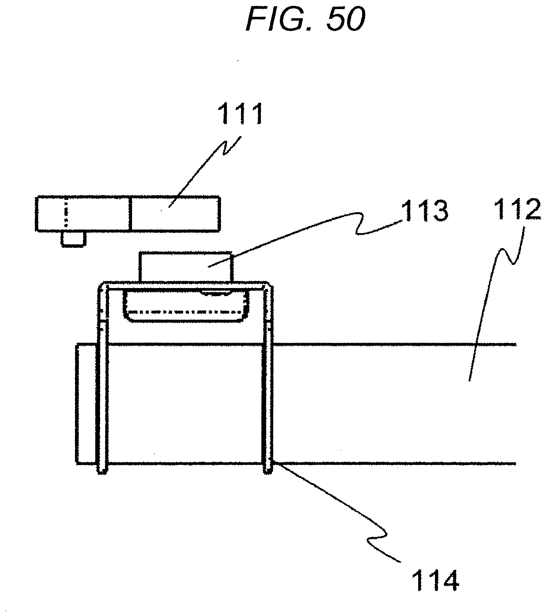

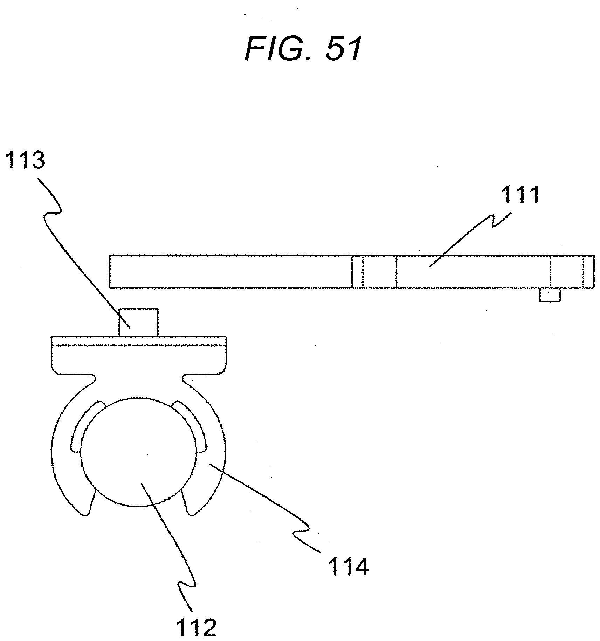

The magnetic sensor 111 is arranged perpendicularly to the magnet 113 as illustrated in FIG. 1. Alternatively, the magnetic sensor 111 may be arranged in parallel with the magnet 113 as illustrated in FIGS. 45 to 51.

### Reference Signs List

- 110: target
- 111: magnetic sensor
- 112: movable object
- 112a: first groove
- 112b: second groove
- 112c: truncated portion
- 112d: hollow
- 112e: protrusion
- 112f: hole
- 112g: hole
- 112h: protrusion
- 112i: hollow
- 113: magnet
- 114: magnet base
- 114a: first fixing portion
- 114b: second fixing portion
- 114c: magnet holding portion
- 114d: first contact portion
- 114e: second contact portion
- 114f: third contact portion
- 114g: opening
- 114h: tip portion
- 114i: base portion
- 114j: hollow
- 114k: protrusion
- 115: base cover
- 116: positioning protrusion
- 117: positioning hollow

## Claims

1. A position sensor comprising a magnetic sensor (111) and a target (110) configured to be installed on a movable object (112), wherein
the target (110) has a magnet (113) and a magnet base (114) that holds the magnet (113),
the magnet base (114) has a magnet holding portion (114c) and a fixing portion (114a, 114b) for fixation to the movable object (112), the magnet holding portion (114c) and the fixing portion (114a, 114b) being formed integrally,
the fixing portion (114a, 114b) has a first fixing portion (114a) and a second fixing portion (114b), and
the first fixing portion (114a) has a partially opened ring shape,
**characterized in that** the first fixing portion (114a) has first, second, and third contact portions (114d, 114e, 114f) formed such that centers of each contact portion coming into contact with the movable object (112) form an equilateral triangle.

2. The position sensor according to claim 1, wherein
the first contact portion (114d) is formed apart from an opening (114g) of the first fixing portion (114a),
the second and third contact portions (114e, 114f) are formed adjacent to the opening (114g),
the first contact portion (114d) is shaped to have a flat portion, and
the second and third contact portions (114e, 114f) have an arc shape.

3. The position sensor according to claim 2, wherein the first fixing portion (114a) has
a first non-contact portion that does not come into contact with the movable object (112) between the first and second contact portions (114d, 114e), and
a second non-contact portion that does not come into contact with the movable object (112) between the first and third contact portions (114d, 114f).

4. The position sensor according to claim 3, wherein the opening (114g) of the first fixing portion (114a) has a tapered shape gradually narrowing from an opening end to an inner side.

5. The position sensor according to any one of the preceding claims, wherein the second fixing portion (114b) has a shape similar to that of the first fixing portion (114a).

6. The position sensor according to any one of the preceding claims, wherein the second fixing portion (114b) is shaped to have
a protrusion (114k) fitted into a hollow (112e) formed in the movable object (112), or
a hollow (114j) fitted into a protrusion (112h) formed on the movable object (112).

7. A position sensing arrangement comprising the position sensor according to claim 1 and the movable object (112), wherein the movable object (112) has a groove (112a, 112b) formed along a circumferential direction, and
the target (110) is fixed to the movable object (112) by fitting the fixing portion (114a, 114b) into the groove (112a, 112b).

8. A position sensing arrangement comprising the position sensor according to claim 5 and the movable object (112), wherein
the movable object (112) has first and second grooves (112a, 112b) formed along a circumferential direction,
the first groove (112a) has a partially flattened portion (112c),
the target (110) is fixed to the movable object (112) by fitting the first fixing portion (114a) into the first groove (112a) and fitting the second fixing portion (114b) into the second groove (112b), and
the first contact portion (114d) comes into contact with the flattened portion (112c).

9. A position sensing arrangement comprising the position sensor according to claim 5 and the movable object (112), wherein
the movable object (112) has first and second grooves (112a, 112b) formed along a circumferential direction,
a flattened flat portion (112c) is formed between the first and second grooves (112a, 112b),
the target (110) is fixed to the movable object (112) by fitting the first fixing portion (114a) into the first groove (112a) and fitting the second fixing portion (114b) into the second groove (112b), and
the magnet holding portion (114c) is fixed in a position facing the flat portion (112c).

10. The position sensor according to any one of claims 1 to 6 or the position sensing arrangement according to claims 7 to 9, further comprising a base cover (115) that covers the magnet (113), wherein the magnet base (114) has a housing hollow formed in the magnet holding portion (114c), and the magnet (113) is disposed in the housing hollow.

11. The position sensor according to any one of claims 1 to 6 or the position sensing arrangement according to claims 7 to 9, further comprising a base cover (115) that covers the magnet (113), wherein the base cover (115) is provided with a housing hollow that houses the magnet (113).

12. The position sensor or the position sensing arrangement according to claim 10 or 11, wherein the magnet base (114) is provided with a hollow (117) or a protrusion (116) that matches a positioning protrusion (116) or a positioning hollow (117) formed in the base cover (115).

13. The position sensor according to any of claims 1 to 5, wherein the target (110) is configured to be installed on the movable object (112) moving in an axial direction and provided with the magnet (113) that generates a magnetic force detected by the magnetic sensor (111).

## Patentansprüche

1. Positionssensor mit einem Magnetsensor (111) und einem Zielobjekt (110), das dazu konfiguriert ist, auf einem bewegbaren Objekt (112) installiert zu werden, wobei
das Zielobjekt (110) einen Magnet (113) und eine Magnetbasis (114) aufweist, die den Magnet (113) hält,
die Magnetbasis (114) einen Magnethalteabschnitt (114c) und einen Befestigungsabschnitt (114a, 114b) zur Befestigung des bewegbaren Objekts (112) aufweist, wobei der Magnethalteabschnitt (114c) und der Befestigungsabschnitt (114a, 114b) einstückig ausgebildet sind,
der Befestigungsabschnitt (114a, 114b) einen ersten Befestigungsabschnitt (114a) und einen zweiten Befestigungsabschnitt (114b) aufweist, und
der erste Befestigungsabschnitt (114a) eine teilweise offene Ringform hat,
**dadurch gekennzeichnet, dass** der erste Befestigungsabschnitt (114a) erste, zweite und dritte Kontaktabschnitte (114d, 114e, 114f) aufweist, die so ausgebildet sind, dass Zentren jedes Kontaktabschnitts, der in Kontakt mit dem bewegbaren Objekt (112) kommt, ein gleichseitiges Dreieck bilden.

2. Positionssensor, nach Anspruch 1, wobei
der erste Kontaktabschnitt (114d) entfernt von einer Öffnung (114g) des ersten Befestigungsabschnitts (114a) gebildet ist,
der zweite und der dritte Kontaktabschnitt (114e, 114f) angrenzend an die Öffnung (114g) ausgebildet sind,
der erste Kontaktabschnitt (114d) so geformt ist, dass er einen flachen Abschnitt aufweist, und
der zweite und der dritte Kontaktabschnitt (114e, 114f) eine Bogenform aufweisen.

3. Positionssensor nach Anspruch 2, wobei der erste Befestigungsabschnitt (114a) aufweist:
einen, zwischen dem ersten und dem zweiten Kontaktabschnitt (114d, 114e) angeordneten, ersten Nicht-Kontakt-Abschnitt, der nicht in Kontakt mit dem bewegbaren Objekt (112) kommt, und
einen, zwischen dem ersten und dem dritten Kontaktabschnitt (114d, 114f) angeordneten, zweiten Nicht-Kontakt-Abschnitt, der nicht in Kontakt mit dem bewegbaren Objekt (112) kommt.

4. Positionssensor nach Anspruch 3, wobei die Öffnung (114g) des ersten Befestigungsabschnitts (114a) eine Keilform aufweist, die sich graduell von einem Öffnungsende zu einer Innenseite verjüngt.

5. Positionssensor nach einem der vorstehenden Ansprüche, wobei der zweite Befestigungsabschnitt (114b) eine ähnliche Form aufweist wie der erste Befestigungsabschnitt (114a).

6. Positionssensor nach einem der vorstehenden Ansprüche, wobei der zweite Befestigungsabschnitt (114b) so geformt ist, dass er
einen Vorsprung (114k) aufweist, der in einen Hohlraum (112e) passt, der in dem bewegbaren Objekt (112) ausgebildet ist, oder
einen Hohlraum (114j) aufweist, in den ein Vorsprung (112h) passt, der an dem bewegbaren Objekt (112) ausgebildet ist.

7. Positionsmessanordnung mit dem Positionssensor nach Anspruch 1 und dem bewegbaren Objekt (112), wobei
das bewegbare Objekt (112) eine Nut (112a, 112b) aufweist, die längs einer Umfangsrichtung ausgebildet ist, und
das Zielobjekt (110) an dem bewegbaren Objekt (112) befestigt ist, indem der Befestigungsabschnitt (114a, 114b) in die Nut (112a, 112b) eingepasst ist.

8. Positionsmessanordnung mit dem Positionssensor nach Anspruch 5 und dem bewegbaren Objekt (112), wobei
das bewegbare Objekt (112) eine erste und eine zweite Nut (112a, 112b) aufweist, die längs einer Umfangsrichtung ausgebildet sind,
die erste Nut (112a) einen teilweise abgeflachten Abschnitt (112c) aufweist,
das Zielobjekt (110) an dem bewegbaren Objekt (112) befestigt ist, indem der erste Befestigungsabschnitt (114a) in die erste Nut (112a) und der zweite Befestigungsabschnitt (114b) in die zweite Nut (112b) eingepasst ist, und
der erste Kontaktabschnitt (114d) in Kontakt mit dem abgeflachten Abschnitt (112c) kommt.

9. Positionsmessanordnung mit dem Positionssensor nach Anspruch 5 und dem bewegbaren Objekt (112), wobei
das bewegbare Objekt (112) eine erste und eine zweite Nut (112a, 112b) aufweist, die längs einer Umfangsrichtung gebildet sind,
ein abgeflachter Flachabschnitt (112c) zwischen der ersten und der zweiten Nut (112a, 112b) ausgebildet ist,
das Zielobjekt (110) an dem bewegbaren Objekt (112) befestigt ist, indem der erste Befestigungsabschnitt (114a) in die erste Nut (112a) und der zweite Befestigungsabschnitt (114b) in die zweite Nut (112b) eingepasst ist, und
der Magnethalteabschnitt (114c) in einer Position befestigt ist, in der er dem Flachabschnitt (112c) zugewandt ist.

10. Positionssensor nach einem der Ansprüche 1 bis 6, oder Positionsmessanordnung nach einem der Ansprüche 7 bis 9, ferner mit einer Basisabdeckung (115), die den Magnet (113) abdeckt, wobei die Magnetbasis (114) einen Gehäusehohlraum aufweist, der in dem Magnethalteabschnitt (114c) gebildet ist, und der Magnet (113) in dem Gehäusehohlraum angeordnet ist.

11. Positionssensor nach einem der Ansprüche 1 bis 6 oder Positionsmessanordnung nach einem der Ansprüche 7 bis 9, ferner mit einer Basisabdeckung (115), die den Magnet (113) abdeckt, wobei die Basisabdeckung (115) mit einem Gehäusehohlraum versehen ist, in dem der Magnet (113) untergebracht ist.

12. Positionssensor oder Positionsmessanordnung nach Anspruch 10 oder 11, wobei die Magnetbasis (114) mit einem Hohlraum (117) oder einem Vorsprung (116) versehen ist, der zu einem in der Basisabdeckung (115) ausgebildeten Positionierungsvorsprung (116) oder Positionierungshohlraum (117) passt.

13. Positionssensor nach einem der Ansprüche 1 bis 5, wobei das Zielobjekt (110) dazu konfiguriert ist, an dem bewegbaren Objekt (112) installiert zu werden, das sich in einer Axialrichtung bewegt und mit dem Magnet (113) versehen ist, der eine durch den Magnetsensor (111) erfasste Magnetkraft erzeugt.

## Revendications

1. Capteur de position comprenant un capteur magnétique (111) et une cible (110) configurée pour être installée sur un objet mobile (112), dans lequel
la cible (110) a un aimant (113) et une base (114) d'aimant qui maintient l'aimant (113),
la base (114) d'aimant a une partie (114c) de maintien d'aimant et une partie (114a, 114b) de fixation pour fixation à l'objet mobile (112), la partie (114c) de maintien d'aimant et la partie (114a, 114b) de fixation étant formées de façon intégrale,
la partie (114a, 114b) de fixation a une première partie (114a) de fixation et une deuxième partie (114b) de fixation, et
la première partie (114a) de fixation a une forme de bague partiellement ouverte,
**caractérisé en ce que** la première partie (114a) de fixation a des première, deuxième, et troisième parties (114d, 114e, 114f) de contact formées de telle façon que des centres de chaque partie de contact venant en contact avec l'objet mobile (112) forment un triangle équilatéral.

2. Capteur de position selon la revendication 1, dans lequel
la première partie (114d) de contact est formée à l'écart d'une ouverture (114g) de la première partie (114a) de fixation,
les deuxième et troisième parties (114e, 114f) de contact sont formées adjacentes à l'ouverture (114g),
la première partie (114d) de contact est formée de façon à avoir une partie plate, et
les deuxième et troisième parties (114e, 114f) de contact ont une forme d'arc.

3. Capteur de position selon la revendication 2, dans lequel la première partie (114a) de fixation a
une première partie de non contact qui ne vient pas en contact avec l'objet mobile (112) entre les première et deuxième parties (114d, 114e) de contact, et
une deuxième partie de non contact qui ne vient pas en contact avec l'objet mobile (112) entre les première et troisième parties (114d, 114f) de contact.

4. Capteur de position selon la revendication 3, dans lequel l'ouverture (114g) de la première partie (114a) de fixation a une forme effilée rétrécissant graduellement d'une extrémité d'ouverture à un côté intérieur.

5. Capteur de position selon l'une quelconque des revendications précédentes, dans lequel la deuxième partie (114b) de fixation a une forme similaire à celle de la première partie (114a) de fixation.

6. Capteur de position selon l'une quelconque des revendications précédentes, dans lequel la deuxième partie (114b) de fixation est formée de façon à avoir
une saillie (114k) ajustée dans un creux (112e) formé dans l'objet mobile (112), ou
un creux (114j) ajusté dans une saillie (112h) formée sur l'objet mobile (112).

7. Agencement de détection de position comprenant le capteur de position selon la revendication 1 et l'objet mobile (112), dans lequel
l'objet mobile (112) a une rainure (112a, 112b) formée le long d'un sens circonférentiel, et
la cible (110) est fixée à l'objet mobile (112) en ajustant la partie (114a, 114b) de fixation dans la rainure (112a, 112b).

8. Agencement de détection de position comprenant le capteur de position selon la revendication 5 et l'objet mobile (112), dans lequel
l'objet mobile (112) a des première et deuxième rainures (112a, 112b) formées le long d'un sens circonférentiel,
la première rainure (112a) a une partie partiellement aplatie (112c),
la cible (110) est fixée à l'objet mobile (112) en ajustant la première partie (114a) de fixation dans la première rainure (112a) et en ajustant la deuxième partie (114b) de fixation dans la deuxième rainure (112b), et
la première partie (114d) de contact vient en contact avec la partie aplatie (112c).

9. Agencement de détection de position comprenant le capteur de position selon la revendication 5 et l'objet mobile (112), dans lequel
l'objet mobile (112) a des première et deuxième rainures (112a, 112b) formées le long d'un sens circonférentiel,
une partie plate aplatie (112c) est formée entre les première et deuxième rainures (112a, 112b),
la cible (110) est fixée à l'objet mobile (112) en ajustant la première partie (114a) de fixation dans la première rainure (112a) et en ajustant la deuxième partie (114b) de fixation dans la deuxième rainure (112b), et
la partie (114c) de maintien d'aimant est fixée dans une position faisant face à la partie plate (112c).

10. Capteur de position selon l'une quelconque des revendications 1 à 6 ou agencement de détection de position selon les revendications 7 à 9, comprenant en outre un couvre-base (115) qui recouvre l'aimant (113), dans lequel la base (114) d'aimant a un creux de logement formé dans la partie (114c) de maintien d'aimant, et l'aimant est disposé dans le creux de logement.

11. Capteur de position selon l'une quelconque des revendications 1 à 6 ou agencement de détection de position selon les revendications 7 à 9, comprenant en outre un couvre-base (115) qui recouvre l'aimant (113), dans lequel le couvre-base (115) est prévu avec un creux de logement qui loge l'aimant (113).

12. Capteur de position ou agencement de détection de position selon la revendication 10 ou 11, dans lequel la base (114) d'aimant est prévue avec un creux (117) ou une saillie (116) qui correspond à une saillie (116) de positionnement ou un creux (117) de positionnement formé(e) dans le couvre-base (115).

13. Capteur de position selon l'une quelconque des revendications 1 à 5, dans lequel la cible (110) est configurée pour être installée sur l'objet mobile (112) se déplaçant dans un sens axial et prévue avec l'aimant (113) qui génère une force magnétique détectée par le détecteur magnétique (111).
